(19)

Europäisches Patentamt

European Patent Office

Office européen des brevets

(11) **EP 3 628 642 A1**

(12) **EUROPEAN PATENT APPLICATION**

(43) Date of publication:
**01.04.2020 Bulletin 2020/14**

(51) Int Cl.:
***C01B 37/00*** *(2006.01)*   ***C01B 39/02*** *(2006.01)*

(21) Application number: **18196479.2**

(22) Date of filing: **25.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evonik Operations GmbH**
**45128 Essen (DE)**

(72) Inventors:
• **Schmidt, Dr. Franz**
  **60386 Frankfurt (DE)**
• **Anton, Dr. Johan**
  **63486 Bruchköbel (DE)**

• **Pascaly, Dr. Matthias**
  **48163 Münster (DE)**
• **Bernhard, Andrea**
  **60388 Frankfurt (DE)**
• **Weiland, Dr. Stefan**
  **63456 Hanau (DE)**
• **Morell, Dr. Heiko**
  **63110 Rodgau (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(54) **PROCESS FOR THE MANUFACTURE OF PULVERULENT, POROUS CRYSTALLINE METAL SILICATES EMPLOYING FLAME SPRAY PYROLYSIS**

(57)   The present invention relates to a process for the manufacture of a pulverulent, porous crystalline metal silicate, comprising the following steps:

(a) hydrothermal synthesis employing an aqueous mixture comprising

(A) a silicon source,

(B) a metal source, and

(C) an auxiliary component,

yielding an aqueous suspension of reaction product 1, comprising a raw porous crystalline metal silicate; and

(b) flame spray pyrolysis of reaction product 1, wherein the aqueous suspension obtained in step (a) is sprayed into a flame generated by combustion of a fuel in the presence of oxygen to form a pulverulent, porous crystalline metal silicate; wherein the aqueous suspension comprising reaction product 1 obtained in step (a) exhibits a solids content of $\leq 70\%$ by weight; and

wherein the effective peak temperature, $T_{eff}$, experienced by at least 90% by weight of the porous crystalline metal silicate during flame pyrolysis, is in the range $T_{min} < T_{eff} < T_{max}$, and

wherein $T_{min}$ is 750 °C, and

wherein Tmax is 1250 °C.

EP 3 628 642 A1

## Description

### Background

The present invention relates to a process for preparing pulverulent, porous crystalline metal silicates.

The term Silicate refers to compounds formed by tetrahedral $SiO_4$, the tetrahedra of which may be joined to one another in various ways. Silicate structures of this kind containing metals, are designated as metal silicates. Important examples of metal silicates are zeolites.

Zeolites are crystalline silicates, e.g. aluminosilicates, in which a three-dimensional linkage of silicate tetrahedra ($SiO_4^-$) and other structural units (for example $AlO_4^-$ tetrahedra) gives rise to regular structures exhibiting cavities and pores. Various types of zeolites exist, which are named according to their structure type. General information relating to zeolites, especially crystal structure types of known zeolites, can be found in Ullmann's Encyclopedia of Industrial Chemistry, "Zeolites", published online April 15, 2012, DOI: 10.1002/14356007.a28_475.pub2.

Due to their unique pore structure, zeolites exhibit interesting properties and can be used, for example, as oxidation catalysts.

Synthetic zeolites can be prepared by hydrothermal synthesis in the presence of a pore structure-forming template. CN 101348263 A, for example, discloses a process for preparing zeolites having a Si/Al ratio of 50 to 5000 and a particle size of 30 to 200 $\mu$m that comprises the following process steps: (1) provision of a reaction mixture comprising silicon sources and aluminium sources and a metal hydroxide; (2) hydrolysis reaction; (3) subsequent spray-drying of the mixture to form aluminosilicate microspheres; (4) hydrothermal reaction of the microspheres prepared beforehand in the presence of water and an organic amine at a temperature of 160 to 200 °C and crystallization of the zeolite formed; and (5) washing, (6) drying and (7) calcination thereof at a temperature of 350 to 800 °C.

US 4410501 A discloses a process for preparing titanium silicalite. The titanium silicalite is prepared by (1) formation of a synthesis gel proceeding from a hydrolysable silicon compound, for example tetraethyl orthosilicate, and a hydrolysable titanium compound in the presence of tetra-n-propylammonium hydroxide at 175 °C, (2) subsequent hydrothermal synthesis, hydrolysis and crystallization of this reaction mixture. After the crystallization has ended, the crystals are (3) removed by filtration, (4) washed, (5) dried and finally (6) calcined at 550 °C for 6 h.

EP 814058 A1 discloses the preparation of various zeolites from the corresponding pyrogenic mixed metal-silicon oxides. The mixed metal-silicon oxides are obtained by (1) hydrothermal synthesis at a temperature between 100 and 220 °C in the presence of a template selected from amines, ammonium compounds and alkali metal/alkaline earth metal hydroxides, followed by (2) filtration, (3) washing with water and (4) calcination, for example at a temperature of 550 °C within four hours. In a particular embodiment, by spray-drying, a preformed, template-containing granular mixed oxide material is prepared, which is subsequently subjected to a hydrothermal synthesis, filtered, washed and calcined.

CN 1482062 discloses a process for preparing titanium silicalite-1, in which solid silica gel is subjected to hydrothermal reaction with an inorganic titanium source. The process comprises the following steps: (1) impregnation of solid silica gel with $Ti(SO_4)_2$, (2) calcination, (3) hydrothermal synthesis of silica gel with $Ti(SO_4)_2$ + TPAOH + water, (4) (precipitation and) filtration, (5) washing, (6) drying, (7) calcination.

Process steps subsequent to hydrothermal synthesis in prior art procedures are costly and time consuming. In particular, washing off organic material from the raw porous crystalline metal silicate deposited during hydrothermal synthesis is cumbersome and gives rise to considerable amounts of waste-water frequently containing substances harmful to water organisms and difficult to dispose of, such as tetraalkylammonium salts (formed during precipitation). Furthermore, drying and calcination of washed porous crystalline metal silicate at the end of the procedure is costly requiring considerable amounts of time and energy.

In the context of the present invention, it was found that precipitation, filtration, washing, drying and calcination of raw porous crystalline metal silicate obtained from hydrothermal synthesis can be avoided altogether if the material is subjected to a suitable flame pyrolysis procedure instead. This had not been disclosed or suggested in the prior art and is particularly surprising in view of the fact, that the ordered porous structure of crystalline metal silicates is known to be destroyed at elevated temperatures. Titanium silicalite-1, for example, undergoes irreversible structural change at temperatures above 650 °C (cf. e.g. Advanced Materials Research Vol. 287-290, 2011, p. 317-321) - a temperature significantly exceeded inside the flame of a flame pyrolysis device and also during combustion of organic residue deposited on raw porous crystalline metal silicate particles in the course of flame pyrolysis.

In the context of the present invention it was found that flame pyrolysis can be performed with raw porous crystalline metal silicate materials obtained from hydrothermal synthesis in a manner preserving their ordered porous crystalline metal silicate structure and without adversely affecting their catalytic properties.

**The present Invention**

In particular, it was found that a pulverulent, porous crystalline metal silicate can be obtained by a process comprising the following steps:

(a) hydrothermal synthesis employing an aqueous mixture comprising

(A) a silicon source,

(B) a metal source, and

(C) an auxiliary component, yielding an aqueous suspension of reaction product 1, comprising a raw porous crystalline metal silicate; and

(b) flame spray pyrolysis of reaction product 1, wherein the aqueous suspension obtained in step (a) is sprayed into a flame generated by combustion of a fuel in the presence of oxygen to form a pulverulent, porous crystalline metal silicate;
wherein the aqueous suspension comprising reaction product 1 obtained in step (a) exhibits a solids content of $\leq$ 70% by weight; and
wherein the effective peak temperature, $T_{eff}$, experienced by at least 90% by weight of the porous crystalline metal silicate during flame pyrolysis, is in the range $T_{min} < T_{eff} < T_{max}$, and
wherein $T_{min}$ is 750 °C, and
wherein $T_{max}$ is 1250 °C.

**Hydrothermal synthesis**

Hydrothermal synthesis, also called hydrothermal crystal growth, is a process for crystallization from aqueous mixtures at temperatures in the range of about 100 to about 300 °C and elevated pressure of up to about 100 bar that can be employed for reactants and products sparingly soluble in aqueous solution below 100 °C. Hydrothermal synthesis of pulverulent, porous crystalline metal silicates, and zeolites in particular, are well known in the art. Performing step (a) of the process of the present invention, i.e. hydrothermal synthesis employing an aqueous mixture comprising (A) a silicon source, (B) a metal source and (C) an auxiliary component, yields an aqueous suspension of reaction product 1, comprising a raw porous crystalline metal silicate. Preferably, step (a) of the process of the present invention is conducted at a temperature of 100 to 250 °C, more preferably of 100 to 200 °C, under the autogenous pressure generated in a pressure-resistant reactor, for example an autoclave. The pressure established during hydrothermal synthesis in step (a) of the process according to the invention may be within a range from 1.05 to 50 bar. Preferably, the pressure is within a range from 1.5 to 30 bar; more preferably, the pressure is within a range from 2 to 20 bar. Typically, abovementioned reaction conditions enable a person of skill in the art to perform step (a) of the process of the present invention in less than 12 hours, preferably, in a range from 0.1 to 6 hours, more preferably in a range from 0.5 to 4 hours.

Hydrothermal synthesis is typically conducted in a basic medium at a pH exceeding 7. Hydrothermal synthesis according to the present invention, preferably, is performed at a pH within a range from 8 to 14; more preferably,in a range from 9 to 13.

Generally, hydrothermal synthesis of porous crystalline metal silicates requires use of auxiliary components facilitating dissolution of silicon- and metal sources, and adjustment of pH value to be suitable for crystal formation. Furthermore, the auxiliary component provides a template which, by incorporation into the crystal lattice of the product during hydrothermal synthesis, determines the crystal structure of the metal silicate formed. Only auxiliary components that are thermally and/or oxidatively broken down during flame spray pyrolysis in step (b) are suitable for the process according to the present invention. Preferably, in the process of the present invention the auxiliary component is broken down to an extent of more than 70% by weight, most preferably to an extent of more than 90% by weight. Corresponding auxiliary components are well known to those of skill in the art. Typical examples of auxiliary components suitable for the process of the present invention that can be used to facilitate dissolution of silicon- and metal sources, and adjustment of pH value are inorganic or organic bases, such as ammonium hydroxide or quaternary ammonium hydroxides, for example tetrapropylammonium hydroxide. Typical examples of auxiliary components suitable for the process of the present invention that can be used for supporting formation of the crystal structure of the metal silicate (templates) are amines, quaternary ammonium compounds and alcohols, more specifically tri(n-propyl)amine, di(n-propyl)amine, n-propylamine, di(n-butyl)amine, ethylenediamine, propanolamine, ethanolamine, quinuclidine and substituted derivatives thereof, ammonia, ammonium salts, morpholine, 1,5-diaminopentane, 1,6-diaminohexane, dipropylenetriamine, dihexamethylenetriamine, triethylenetetramine, diethylenetriamine, 1-alkyl-4-azobicyclo[2.2.2]octane 4-oxide halides, glycerol, hexanediol and pentanediol.

In preferred embodiments, processes according to the present invention employ one or more of the following auxiliary components for supporting formation of the crystal structure of the metal silicate (templates): tetraalkylammonium compounds such as tetraalkylammonium hydroxides, especially tetra-n-propylammonium hydroxide (TPAOH), tetra-n-butylammounium hydroxide and tetraethylammonium hydroxide.

Particularly preferred processes according to the present invention employ tetrapropylammonium hydroxide as an auxiliary component. Quaternary ammonium compounds are preferably used in the form of aqueous solutions.

In a preferred embodiment, processes according to the present invention employ tetra-n-propylammonium hydroxide (TPAOH) for supporting formation of titanium silicalite-1 (MFI structure).

In another preferred embodiment, processes according to the present invention employ tetra-n-butylammonium hydroxide for supporting formation of titanium silicalite-2 (MEL structure).

It is apparent to those of skill in the art that auxiliary components for hydrothermal synthesis according to the present invention have to be chosen such that (i) dissolution of silicon- and metal sources, (ii) adjustment of pH value as well as (iii) support of the crystal structure of the metal silicate are facilitated. This may be accomplished with one auxiliary component capable of performing all three functions ((i), (ii) and (iii)) or, alternatively, with more than one auxiliary component, each performing parts of the set of functions ((i), (ii) and (iii)).

The molar ratio of the total amount of auxiliary components used for supporting formation of the crystal structure of the metal silicate (template) to the amount of silicon used in step (a) of the process according to the present invention is not limited in principle. Preferably, the molar ratio is chosen in the following range $0.12 \leq$ mol of template/mol of silicon $< 0.20$.

For optimal performance of step (a) of the process according to the invention, the aqueous mixture may additionally comprise suitable seed crystals. Suitable seed crystals and processes for obtaining them are known to those of skill in the art.

The silicon source used in the process according to the present invention may in principle be any compound that contains or is capable of forming silicon dioxide or a silicon-containing mixed oxide as a result of oxidation or thermal and/or hydrolytic breakdown. However, preference is given to compounds containing amorphous silicon dioxide or amorphous silicon-containing mixed oxide, or can form such compounds by oxidation or thermal and/or hydrolytic breakdown. A corresponding silicon source may, for example, be selected from the group consisting of pyrogenic silicon dioxide, precipitated silicon dioxide, silicon dioxide produced by a sol-gel process and mixtures thereof. Preferred processes according to the present invention, employ component (A) selected from the group consisting of pyrogenic silicon dioxide, precipitated silicon dioxide, silicon dioxide produced by a sol-gel process and mixtures thereof.

Pyrogenic silicon dioxide, also called fumed silica, is prepared by means of flame hydrolysis or flame oxidation. This involves oxidizing or hydrolysing hydrolysable or oxidizable starting materials, usually in a hydrogen/oxygen flame. Starting materials that may be used for pyrogenic methods include organic and inorganic substances. Silicon tetrachloride is particularly suitable. The hydrophilic silica thus obtained is amorphous. Fumed silica are generally obtained in aggregated form. "Aggregated" shall be understood to mean that the primary particles, i.e. the particles generated during the initial stages of the process, form strong interconnections in subsequent stages of the reaction, ultimately yielding a three-dimensional network. Primary particles are substantially free of pores and have free hydroxyl groups on their surface.

Precipitated silica on the other hand is silicon dioxide prepared by precipitation-processes, for example, as a result of the reaction of waterglass (sodium silicates) with mineral acids.

The sol-gel process is a process for preparing nonmetallic inorganic or hybrid-polymeric materials from colloidal dispersions, called sols. Starting materials for a sol synthesis are often alkoxides of metals or silicon. The hydrolysis of such starting materials and the condensation between the reactive species that form are the essential base reactions in the sol-gel process. Particularly suitable silicon sources for sol-gel processes are tetraalkyl orthosilicates wherein alkyl is preferably selected from the group consisting of methyl, ethyl, propyl and butyl. The most preferred tetraalkyl orthosilicate is tetraethyl orthosilicate.

The metal source used in the process according to the present invention may be any compound containing metal oxide or metal-containing mixed oxide, or can form the corresponding metal oxide or mixed oxide as a result of oxidation or thermal and/or hydrolytic breakdown. Metal sources used in the context of the present invention are sources of titanium (Ti), aluminium (Al), zirconium (Zr), iron (Fe), tin (Sn), germanium (Ge), indium (In) and boron (B), particular preference being given to titanium.

The person skilled in the art is at liberty to select suitable sources for silicon and metal. In principle, the person skilled in the art can select between the following combinations: (a) both, silicon source and metal source are in liquid form, (b) the silicon source is in solid form and the metal source is in liquid form, (c) silicon source and metal source are merged into a single component. "In liquid form" means that silicon source and/or metal source are in liquid- or solution-form.

Silicon sources in solid form may, for example, be selected from the group consisting of pyrogenic silicon dioxide, precipitated silicon dioxide, silicon dioxide produced by a sol-gel process and mixtures thereof. Preference is given to a high-purity silicon dioxide prepared by precipitation or a pyrogenic silicon dioxide.

A high-purity silicon dioxide prepared by precipitation is a silicon dioxide prepared by precipitation and having a content of

- aluminium of less than 1 ppm

- boron of less than 0.1 ppm

- calcium of less than 0.3 ppm

- iron of less than 0.6 ppm

- nickel of less than 0.5 ppm

- phosphorus of less than 0.1 ppm

- titanium of less than 1 ppm

- zinc of less than 0.3 ppm,

where the total sum of abovementioned elements and sodium and potassium is less than 5 ppm. Such a high-purity silicon dioxide can be prepared, e.g. by the process disclosed in WO 2010/037702.

Silicon source and metal source may be merged into a single component in various ways. Examples of such merged components are mixed metal-silicon oxides, metal oxide-doped silicon dioxide, metal-impregnated silicon dioxide, metal silicate, metal-doped tetraalkyl orthosilicate and mixtures thereof. Merged components of this kind are preferably amorphous. Preferably, such merged components are amorphous silicon dioxides doped with metal oxide, amorphous silicon dioxides impregnated with metal, or amorphous mixed metal-silicon oxides.

A "mixed metal-silicon oxide" contains, in addition to $SiO_2$, one or more metal oxides, preferably from the group of $GeO_2$, $In_2O_3$, $Al_2O_3$, $TiO_2$, $B_2O_3$, $SnO_2$, $ZrO_2$ and $Fe_2O_3$. Mixed metal-silicon oxides can be prepared by any suitable method, for example flame pyrolysis, coprecipitation, sol-gel process. Mixed metal-silicon oxides have been disclosed, for example, in EP 0814058 and DE 102007049742.

A "metal oxide-doped silicon dioxide" can be prepared by several processes well known to those of skill in the art, for example by flame pyrolysis or impregnation processes with subsequent calcination.

A "metal-impregnated silicon dioxide" can be prepared by several impregnation processes well known to those of skill in the art, for example by "incipient wetness" methods.

In a preferred embodiment of the process according to the invention, in step (a), component (A) and component (B) are merged into a single component and this component is selected from the group consisting of amorphous mixed metal-silicon oxide, amorphous silicon dioxide doped with metal oxide, amorphous silicon dioxide impregnated with metal, metal silicate, metal-doped tetraalkyl orthosilicate and mixtures thereof. More preferably, component (A) is an amorphous silicon dioxide doped with metal oxide, an amorphous silicon dioxide impregnated with metal, or an amorphous mixed metal-silicon oxide.

In a further preferred embodiment of the process according to the invention, in step (a), component (A) is in solid form and component (B) in liquid form. More preferably in this context, component (A) is selected from the group consisting of pyrogenic silicon dioxide, precipitated silicon dioxide, silicon dioxide produced by a sol-gel process and mixtures thereof. Most preferably in this context, component (A) is a high-purity silicon dioxide prepared by precipitation of a pyrogenic silicon dioxide.

The aqueous suspension of reaction product 1, comprising a raw porous crystalline metal silicate, exhibits a solids content of $\leq$ 70% by weight. The solids content wFT (% by wt.) can be calculated from the total mass of this suspension (MS) and the mass of water in this suspension ($MH_2O$):

wFT = (MS-$MH_2O$)/MS*100%

Preferably, the solids content is within a range from 10% to 70% by weight; it is more preferably within a range from 10% to 60% by weight; it is most preferably within a range from 20% to 50% by weight. A solids content exceeding 70% by weight causes technical difficulties during flame spray pyrolysis in step (b) of the process according to the invention, while a solids content lower than 10% by weight adversely affects the economic viability of the process owing to an excessively large amount of water having to be evaporated. The person skilled in the art is aware of methods for adjusting the solids content; for example, reactants can be used in suitable concentrations or the suspension can be diluted.

**Flame Spray Pyrolysis**

The term "flame spray pyrolysis" is well known to those of skill in the art and relates to a process for thermal oxidative conversion of a liquid raw material finely distributed in a gas stream by spraying of a suspension into a flame generated by combustion of a fuel in the presence of oxygen. Flame spray pyrolysis is an established process for preparing metal oxides, described, for example, in WO 2017/001366 A1 and US 2002/0041963 A1. For example, WO 2017/001366 A1 discloses a process of this kind for preparing metal oxide powders by means of flame spray pyrolysis, in which a siloxane-containing aerosol is introduced directly into the flame in a reactor, where it is converted to silicon dioxide.

The Flame Spray Pyrolysis-process according to the present invention requires use of combustible fuels. Examples of such fuels include hydrogen, methane, ethane, propane, butane, wet-, dry-, or synthetic natural gas (NG) and mixtures thereof. The fuels, preferably, are supplied to the reactor in a gaseous state. If methane, ethane, propane, butane, wet-, dry-, or synthetic natural gas (NG) are employed as fuels, however, throughput of aqueous suspension sprayed into the flame has to be reduced in comparison to using hydrogen as a fuel. Accordingly, for Flame Spray Pyrolysis-processes of the present invention, preferably, hydrogen is used as a fuel, in order to achieve uniform flame temperature and suitable velocity profile.

Oxygen can be fed into the reactor in the form of any gas containing oxygen. In the context of the present invention preference is given to using air.

The average residence time of material of the suspension obtained in step (a) in the reactor during performance of step (b) may be from 1 ms to 100 s. Preferably, the average residence time is within a range from 0.1 to 10 s; more preferably within a range from 0.5 to 5 s. Calculating abovementioned average residence time in the reactor ($<t>$, [s]) is conducted using the total volume of gas fed to the reactor per unit time ($V_t$, [$m^3$/s (STP)]) and reactor volume ($V_R$, [$m^3$]).

$<t> = V_R/V_t$. The average residence time in step (b) of the process according to the invention is selected such that the oxidative breakdown of organic residue takes place in this step, but the porous structure of the product obtained is not damaged.

The aqueous suspension obtained in step (a) of the process according to the invention is sprayed during performance of step (b), i.e. finely distributed in the surrounding gas, and thus forms an aerosol, a triphasic solid/liquid/gas mixture consisting of gas with liquid droplets finely distributed therein, which in turn comprise solid particles. The gas used for spraying the aqueous suspension may comprise oxygen and/or at least one of the above-listed fuels and/or at least one inert gas, for example nitrogen. Preference is given to using $N_2$, $H_2$ or air, particular preference being given to air.

The aerosol formed in step (b) by spraying of the aqueous suspension preferably comprises liquid droplets having a numerical average droplet diameter of not more than 2 mm, more preferably of not more than 1 mm, most preferably of not more than 0.5 mm. Numerical average droplet diameters of liquid droplets in the aerosol are a function of the dimensions of the apparatus used, corresponding flow rates, liquid and gas properties, and other parameters and can be calculated, by those of skill in the art via numerical simulation employing standard simulation software (e.g. Ansys Fluent). Alternatively, numerical average droplet diameters of the aerosol formed in step (b) can be measured directly by means of laser diffraction. The measured droplet size distribution is used to define the median d50, which reflects the droplet size not exceeded by 50% of all particles, as the numerical average droplet diameter.

Spraying of the aqueous suspension that takes place in step (b) of the process according to the invention can be achieved by means of different apparatuses and instruments well known to those of skill in the art. For example, it is possible to use disc atomizers, rotary atomizers, ultrasound atomizers, one-phase, two-phase or multiphase nozzles, and various injector systems or similar systems. Preferably, the aqueous suspension in step (b) of the process according to the invention is sprayed into the flame via at least one nozzle.

Oxygen required in step (b) of the process according to the invention can be fed to the flame spray pyrolysis reactor at multiple sites. For instance, the suspension can be sprayed into a first gas stream comprising air, while the majority of air (primary air) is supplied to the flame as a secondary gas stream parallel to the flow direction of the suspension, and a third gas stream (secondary air) can be fed in tangentially (e.g. orthogonal to the flow direction of the suspension), for example to avoid material deposits. Supplying fuel to the reactor at multiple sites may likewise be advantageous, for example a main stream (primary fuel stream) together with the primary air stream and a secondary stream (secondary fuel stream, outer fuel), for example in order to stabilize the flame.

It is particularly advantageous when, in the performance of step (b) of the process according to the invention, the amount of oxygen is in excess compared to the total amount of all combustible constituents of the reaction mixture. The reaction mixture is understood to mean the suspension converted in step (b) together with the gaseous components used in step (b). The combustible constituents of this reaction mixture include, for example, fuels and templates used. Index $\lambda$ (lambda) describes the ratio of the amount of oxygen present in the reaction mixture divided by the amount of oxygen required to complete combustion of all combustible constituents in the reaction mixture, each in mol/h. Preferably, $\lambda$ is set to a value in the range from 1 to 10; more preferably, from 2 to 6.

Oxygen and fuel used during step (b) of the process of the present invention may be introduced in preheated form. A suitable temperature range is from 50 to 400°C. The suspension generated in step (a) of the process according to the invention can also be introduced into the flame preheated to a temperature of 50 to 300°C. More preferably, the suspension obtained from step (a) of the present invention can be employed directly after production, i.e. without cooling, for flame spray pyrolysis according to step (b).

The ratio of total gas volume used in step (b) in standard cubic metres to the amount of the aqueous suspension used in kg is preferably from 0.1 to 100 $m^3$ (STP)/kg, more preferably from 0.5 to 50 $m^3$ (STP)/kg, most preferably from 1 to 10 $m^3$ (STP)/kg.

The pulverulent, porous crystalline metal silicate obtainable by the process according to the present invention preferably has a zeolite structure. Zeolites are crystalline silicates, for example aluminosilicates, in which a three-dimensional linkage of silicate tetrahedra ($SiO_4$-) and other structural units (for example $AlO_4$- tetrahedra) via oxygen atoms, gives rise to regular structures having cavities and pores. Various types of zeolites exist, which are named according to their structure type. General information relating to zeolites, especially crystal structure types of known zeolites, can be found in Ullmann's Encyclopedia of Industrial Chemistry, "Zeolites" chapter, published online on 15.04.2012, DOI: 10.1002/14356007.a28_475.pub2.

The pulverulent, porous crystalline metal silicate obtainable by the process according to the invention preferably has zeolite structure with a crystal structure of the LTA, MFI, FAU, MOR, MEL or MWW type. Most preferably, the pulverulent, porous crystalline metal silicate obtainable by the process according to the present invention has zeolite structure of the MFI or MEL type. Crystal structure can be determined by structural analysis using x-ray diffraction (XRD). Structure types for micro- and mesoporous zeolite materials are laid down by the International Zeolite Association (IZA, www.iza-online.org).

The pulverulent, porous crystalline metal silicate obtainable by the process according to the present invention, preferably, has micro- and mesopores. Micropores, according to the IUPAC definition, exhibit diameters of less than 2 nm, and mesopores exhibit diameters of 2 to 50 nm.

The general composition of the pulverulent, porous crystalline metal silicates is typically $(SiO_2)_{1-x}(A_mO_n)_x$,

A is an element of valency p from the group consisting of Ti, Al, Zr, Fe, Sn, Ge, In and B; m and n are the number of atoms, where m times p equals 2n; x is a number between 0.0001 and 0.25, preferably between 0.001 and 0.2 and particularly preferred between 0.005 and 0.1. In the case of multiple different metals A, x correspondingly relates to the total sum of all metal oxides. A is preferably selected from titanium (Ti), aluminium (Al), zirconium (Zr), iron (Fe), tin (Sn) and boron (B), Ge (germanium), In (indium), particular preference being given to titanium (Ti).

The pulverulent, porous crystalline metal silicate obtainable by the process according to the present invention may preferably be titanium silicate, boron silicate, zirconium silicate, aluminosilicate or iron silicate. Particular preference is given to titanium silicate, especially titanium silicalite-1 (MFI structure) or titanium silicalite-2 (MEL structure).

The median particle diameter (d50) of the metal silicate particles in the aqueous dispersion that are obtained in step (a) of the process according to the invention is preferably less than 500 nm and more preferably less than 400 nm. The median particle diameter of the metal silicate particles can be determined, for example, by means of dynamic laser light scattering (DLS).

The pulverulent, porous crystalline metal silicates obtained by the process according to the invention may have a specific surface area of $\geq$ 20 $m^2$/g, preferably of 30 to 800 $m^2$/g, more preferably of 50 to 700 $m^2$/g, most preferably of 70 to 600 $m^2$/g. The specific surface area, also referred to simply as BET surface area, is determined according to DIN 9277:2014 by nitrogen adsorption in accordance with the Brunauer-Emmett-Teller method. The cumulated nitrogen pore volume desorbed and the micropore-volume are calculated according to BJH (BARRETT, JOYNER and HALENDA, Journal of the American Chemical Society, 73:373-380, 1951).

Loss on ignition (in % by weight) is defined by DIN 18128:2002-12 as a measure of the proportion of organic substances in a sample. An ashing-process removes the organic component in the sample; for example, the carbon present is oxidized and escapes as carbon dioxide. The loss on ignition according to DIN 18128:2002-12 of the pulverulent, porous crystalline metal silicate obtained by the process according to the invention is preferably less than 5% by weight, more preferably less than 3% by weight, most preferably less than 2% by weight.

In a preferred embodiment the present invention relates to a process, wherein

- component (A) is selected from the group consisting of pyrogenic silicon dioxide, precipitated silicon dioxide, silicon dioxide produced by a sol-gel process and mixtures thereof, and wherein
- the metal source (B) is a source of titanium (Ti), and wherein
- auxiliary component (C) is selected from the group consisting of organic bases, quaternary ammonium hydroxides and mixtures thereof, and wherein
- the porous crystalline metal silicate has a zeolite structure of MFI or MEL type, and wherein
- the fuel used for flame spray pyrolysis is hydrogen.

In another preferred embodiment the present invention relates to a process, wherein

- component (A) and component (B) are merged into a single component and this component is selected from the group consisting of amorphous mixed metal-silicon oxide, amorphous silicon dioxide doped with metal oxide, amorphous silicon dioxide impregnated with metal, metal silicate, metal-doped tetraalkyl orthosilicate and mixtures thereof, and wherein
- the metal source (B) is a source of titanium (Ti), and wherein
- auxiliary component (C) is selected from the group consisting of organic bases, quaternary ammonium hydroxides and mixtures thereof, and wherein
- the porous crystalline metal silicate has a zeolite structure of MFI or MEL type, and wherein
- the fuel used for flame spray pyrolysis is hydrogen.

**Effective peak temperature $T_{eff}$**

The effective peak temperature, $T_{eff}$, is the maximum temperature experienced by the porous crystalline metal silicate in each of the droplets obtained in step (b), during flame spray pyrolysis. The effective peak temperature, $T_{eff}$, results from a number of variables, such as the dimensions of the apparatus used, flow rates, liquid and gas properties etc. It is calculated by standard molecular dynamics calculations (e.g. Ansys Fluent) as described below.

According to the present invention, the effective peak temperature, $T_{eff}$, experienced by at least 90% by weight of the porous crystalline metal silicate during flame pyrolysis, is adjusted such that oxidative breakdown of organic matter present in reaction product 1 is substantially completed (i.e. > 70%, preferably > 90% of organic matter present in reaction product 1 is eliminated), but the porous structure of the product is not damaged.

In order to achieve this, the effective peak temperature, $T_{eff}$, has to be adjusted as follows: $T_{min} < T_{eff} < T_{max}$, with $T_{min}$ = 750 °C and $T_{max}$ = 1250 °C,

In preferred embodiments Tmin and Tmax are chosen as Tmin = 800 °C and Tmax = 1200 °C,

In other preferred embodiments Tmin and Tmax are chosen as Tmin = 850 °C and Tmax = 1100 °C.

*Calculating $T_{eff}$ by standard molecular dynamics simulation (e.g. Ansys Fluent):*

A simulation as described below can be performed with standard simulation software (e.g. Ansys Fluent), thus facilitating calculation of the effective temperature experienced by the porous crystalline metal silicate in each of a plurality of droplets passing through flame pyrolysis. The maximum temperature obtained for each of the droplets is the effective peak temperature, $T_{eff}$, experienced by the porous crystalline metal silicate contained in that droplet. According to the present Invention, the effective peak temperature, $T_{eff}$, experienced by at least 90% by weight of the porous crystalline metal silicate during flame pyrolysis, has to be adjusted as follows: $T_{min} < T_{eff} < T_{max}$. For the purpose of the simulation water, silicate and organic residue components of the droplets need to be considered.

Continuum (gas) phase:

For the purpose of simulation, gas-phases are treated as ideal gases. Thermal conductivity, viscosity and heat capacity $C_p$ of gas mixtures are calculated by using mass-weighted-mixing-law. Properties of pure components (e.g. $H_2$, $H_2O$ (v), $CO_2$, $O_2$, $N_2$) are obtained from material data bases (e.g. from the Ansys Fluent data base). Mass diffusivity of each component in the gas phase is calculated using kinetic gas theory, the required parameters are all available in publicly available material data bases (e.g. the Ansys Fluent data base). Fuel mass flow rate and Air mass flow rate are used as input variables. A realizable k-□ model is used in order to account for turbulence. A discrete ordinate model is used for simulating radiation in the gas phase with angular discretization, e.g. theta divisions: 4; phi divisions 4; theta pixels: 1; phi pixels: 1; wall: opaque, internal emissivity: 1; heat transfer coefficient to environment: e.g. 5 W/m$^2$/K; environment temperature: e.g. 300 K. Combustion model: Finite-rate (one step) /eddy-dissipation. For example with $H_2$ as fuel component: $H_2 + 0.5 O_2 \rightarrow H_2O$; Reaction kinetics: Arrhenius Rate: prefactor = 9.87e+8, Activation energy 3.1e+7 J/kmol, rate exponents for $H_2$ and $O_2$ are 1, for $H_2O$ is 0. Mixing Rate: A =4, B = 0.5.

Disperse (Particle) phase:

Species / Properties: Density of particle $\rho_p$ and Cp of particle are calculated using mixing law of all components. Activation energies, if unavailable from data bases, can be obtained by fitting data of Differential Scanning Calorimetry (DSC) experiments. Reaction heat $H_{reac}$ can be calculated using the standard state enthalpy and Cp.

Particle Motion:

Droplet trajectories are computed using the Euler-Lagrange Approach, so called discrete phase model (DPM) (e.g. in Ansys Fluent), which is used as solver for the simulation. The fluid phase is treated as a continuum by solving the Navier-Stokes equations, while the dispersed phase is solved by tracking a large number of particles through the calculated flow field. The dispersed phase exchanges momentum, mass and energy with the fluid phase. Since the dispersed phase in this case occupies a low volume fraction, particle-particle interaction can be neglected.

The trajectory of a discrete phase particle is predicted by integrating the force balance on the particle, which is written in a Lagrangian reference frame. This force balance equates the particle inertia with the forces acting on the particle, and can be written as

$$\frac{d\vec{u_p}}{dt} = \frac{\vec{u}-\vec{u_p}}{\tau_r} + \frac{g(\rho_p - \rho)}{\rho_p} + \vec{F} \qquad \text{Equation 1}$$

where $\vec{F}$ is an additional acceleration (force/unit particle mass) term, $\dfrac{\vec{u}-\vec{u_p}}{\tau_r}$ is the drag force per unit particle mass and

$$\tau_r = \frac{\rho_p d_p^2}{18\mu} \frac{24}{C_d Re} \qquad \text{Equation 2}$$

$\tau_r$ is the particle relaxation time, $\vec{u}$ is the fluid phase velocity, $\vec{u_p}$ is the particle velocity. $\mu$ is the viscosity of the fluid and $d_p$ is the particle diameter with Reynolds number

$$Re \equiv \frac{\rho d_p |\vec{u_p}-\vec{u}|}{\mu} \qquad \text{Equation 3}$$

Inert heating or cooling of the particles:
Inert heating or cooling is applied when the droplet temperature is less than the vaporization temperature $T_{vap}$, or the solvent and organic residue of the droplet has been consumed, i.e. droplets become dry particles. In this case the particle temperature is calculated using:

$$m_p c_p \frac{dT_p}{dt} = hA_p(T_\infty - T_p) + \varepsilon_p A_p \sigma(\theta_R^4 - T_p^4) \qquad \text{Equation 4}$$

$m_p$ = mass of the particle (kg)

$c_p$ = heat capacity of the particle $(\dfrac{J}{kg \cdot K})$

$A_p$ = surface area of the particle ($m^2$)

$T_\infty$ = local temperature of the continuous phase (K)

$h$ = convective heat transfer coefficient $(\dfrac{W}{m^2 K})$

$\varepsilon_p$ = particle emissivity (dimensionless)

$\sigma$ = Stefan - Boltzmann constant $(5.67 \cdot 10^{-8} \dfrac{W}{m^2 K^4})$

$\theta_R$ = radiation temperature $(\dfrac{G}{4\sigma})^{1/4} K$

In the simulation the radiation of the particle is neglected in view of the small volume fraction

$$\varepsilon_p A_p \sigma(\theta_R^4 - T_p^4) = 0 \qquad \text{Equation 5}$$

The heat transfer coefficient h is evaluated using the correlation of Ranz and Marshall:

$$Nu = \frac{hd_p}{k_\infty} = 2.0 + 0.6Re^{1/2}Pr^{1/3} \qquad \textbf{Equation 6}$$

$d_p$ = particle diameter

$k_\infty$ = thermo conductivity of the continuous phase

Pr = Prandtl number of the continuous phase $c_p\mu/k_\infty$

Heat and mass transfer during Vaporization:
As the droplet reaches vaporization temperature $T_{vap}$, vaporization of the droplet is initialized and continues until the droplet reaches the boiling point, or solvent in the droplet is consumed in between.
Droplet temperature is updated according to a heat balance relating the sensible heat change in the droplet to the convective and latent heat transfer between droplet and continuous phase:

$$m_p c_p \frac{dT_p}{dt} = hA_p\left(T_\infty - T_p\right) - \frac{dm_p}{dt} h_{fg} + \varepsilon_p A_p \sigma\left(\theta_R^4 - T_p^4\right) \qquad \textbf{Equation 7}$$

$$\frac{dm_p}{dt}$$
= rate of the evaporation (kg/s)

$h_{fg}$ = latent heat of water (J/kg)

The rate of vaporization is assumed to be governed by gradient diffusion, with the flux of droplet vapor into the gas phase related to the difference in vapor concentration at the droplet surface and the bulk gas:

$$N_i = k_c\left(C_{i,s} - C_{i,\infty}\right) \qquad \textbf{Equation 8}$$

$$\left(\frac{kmol}{m^2 K}\right)$$

$N_i$ = molar flux of vapor

$k_c$ = mass transfer coefficient (m/s)

$C_{i,s}$ = vapor concentration at the surface (kmol/m$^3$)

$C_{i,\infty}$ = vapor concentration in the bulk gas (kmol/m$^3$)

The concentration of vapor at the droplet surface is evaluated by assuming that the partial pressure of vapor at the interface is equal to the saturated vapor pressure $P_{sat}$, at the droplet temperature $T_p$.

$$C_{i,s} = \frac{P_{sat}(T_p)}{RT_p} \qquad \textbf{Equation 9}$$

R is the universal gas constant.
The concentration of vapor in the bulk gas is known from solution of the transport equation for species i as:

$$C_{i,\infty} = X_i \frac{p}{RT_\infty} \qquad \textbf{Equation 10}$$

$X_i$ = bulk mole fraction of species i
p = local absolute pressure (Pa)
$T_\infty$ = local bulk temperature in gas (K)

The mass transfer coefficient $k_c$ is calculated from the Sherwood number correlation:

$$Sh = \frac{k_c d_p}{D_{i,m}} = 2.0 + 0.6 Re_d^{1/2} Sc^{1/3} \qquad \text{\textbf{Equation 11}}$$

$D_{i,m}$ = diffusion coefficient of vapor in the bulk ($m^2/s$)

$Sc$ = Schmidt number $\dfrac{\mu}{\rho D_{i,m}}$

The vaporization rate $\dfrac{dm_p}{dt}$ is calculated:

$$\frac{dm_p}{dt} = -N_i A_p M_{w,i} \qquad \text{\textbf{Equation 12}}$$

$M_{w,i}$ = molecular weight of vapor ($kg/kmol$)
$A_p$ = surface area of the droplet ($m^2$)

Heat and mass transfer during Boiling:
When the droplet temperature reaches the boiling point $T_{bp}$, a boiling rate equation is applied in view of the fact that the droplet temperature remains constant during boiling

$$\frac{dm_p}{dt} h_{fg} = h A_p \left( T_\infty - T_p \right) \qquad \text{\textbf{Equation 13}}$$

$$h = \frac{2 k_\infty \left( 1 + 0.23 \cdot \sqrt{Re_d} \right) h_{fg}}{d_p c_{p,\infty}} \ln \left( 1 + \frac{c_{p,\infty} (T_\infty - T_p)}{h_{fg}} \right) \qquad \text{\textbf{Equation 14}}$$

by considering the phase change from the liquid to gas phase.

$k_\infty$ = thermal conductivity of gas in $\dfrac{W}{mK}$

$c_{p,\infty}$ = heat capacity of gas in $\dfrac{J}{kgK}$

$h_{fg}$ = latent heat in $\dfrac{J}{kg}$

$$\ln \left( 1 + \frac{c_{p,\infty} (T_\infty - T_p)}{h_{fg}} \right) \approx \frac{c_{p,\infty} (T_\infty - T_p)}{h_{fg}}$$

if $\dfrac{c_{p,\infty} (T_\infty - T_p)}{h_{fg}}$ is small.

Heat and mass transfer during Reaction/Combustion:
When all water is evaporated, combustion is initiated until all organic residue is consumed or the particles fly out of the calculation domain through the outlet.
The surface reaction consumes the oxidant species in the gas phase; that is, it supplies a (negative) source term during the computation of the transport equation for this species. Similarly, the surface reaction is a source of species in the gas phase: the product of the heterogeneous surface reaction appears in the gas phase as a specified chemical species. The surface reaction also consumes or produces energy, in an amount determined by the defined heat of reaction.

The particle heat balance during surface reaction is

$$m_p c_p \frac{dT_p}{dt} = hA_p(T_\infty - T_p) - f_h \frac{dm_p}{dt} H_{reac} \qquad \textbf{Equation 15}$$

$$\left(\frac{J}{kg}\right)$$

$H_{reac}$ = *released heat by the surface reaction*

h is defined as in the case of inert heating.

$f_h$ = *factor*

Only a portion (1 - $f_h$) of the energy produced by the surface reaction appears as a heat source in the gas-phase energy equation, the particle absorbs a fraction $f_h$ of this heat directly. For coal combustion, it is recommended that $f_h$ be set to 0.3 if the char burnout product is $CO_2$, the same value can be applied for the present simulation.

**Product Shaping**

The process according to the invention affords porous crystalline metal silicates in powder form. For use as catalysts, this powder can be converted to a suitable form, for example microgranules, spheres, tablets, solid cylinders, hollow cylinders or honeycombs, by known processes for shaping powder catalysts, for example compaction, granulation, spray drying, spray granulation or extrusion.

In a further aspect, thus, the present invention comprises a process according to the invention, wherein step (b) is followed by a shaping step (c) comprising the following substeps:

(1) adding water for obtaining an aqueous suspension of the pulverulent, porous crystalline metal silicate,
(2) mixing the suspension obtained in substep (1) with granulating aids,
(3) compacting, granulating, spray-drying, spray granulating and/or extruding the product obtained in substep (2) for obtaining a porous crystalline metal silicate in the form of microgranules, spheres, tablets, solid cylinders, hollow cylinders or honeycombs.

The particle size of such shaped bodies is preferably within a range from 0.1 to 10 cm.

For mixing and shaping, it is possible to use all known mixing and shaping devices and processes, and to use all standard granulating aids. Known shaping devices of this kind are described, for example, in Ullmann's Enzyklopädie der Technischen Chemie [Ullmann's Encyclopedia of Industrial Chemistry], 4th edition, volume 2, page 295 ff., 1972. Preference is given to using single- and twin-screw extruders or an extrudate press. It is possible to produce numerous known geometries, for example solid cylinders, hollow cylinders, stars etc. However, it is also possible to produce honeycombs.

In a preferred embodiment the process of present invention is employed for obtaining titanium-containing zeolites of the titanium silicalite-1 and titanium silicalite-2 type, which can be used for example as catalysts in oxidation reactions with hydrogen peroxide. More particularly, it is possible to use such titanium-containing zeolites as catalysts for the epoxidation of olefins by means of aqueous hydrogen peroxide.

**Examples**

**Example 1: Preparation of the raw suspension by hydrothermal synthesis**

Synthesis of titanium silicalite-1 zeolite (TS-1; MFI structure type) was conducted in a 3 m³ pressure reactor in accordance with the corresponding method from Example 1 of EP 0814058 B1. The silicon source used was an amorphous, high-purity silicon dioxide (manufacturer: Evonik Resource Efficiency GmbH), and the titanium source used was an aqueous titanium-tetrapropylammonium hydroxide solution (Ti-TPA solution) having a content of 19.0% by weight of $TiO_2$. The Ti-TPA solution was prepared as follows:

Mixing of 90.1 kg of deionized water, 167.3 kg of a 40% aqueous tetrapropylammonium hydroxide solution (manufacturer: Sachem) and 141.6 kg of tetraethyl orthotitanate (manufacturer: Connect Chemicals GmbH) at 40 °C in a closed vessel for one hour. The exothermicity of the reaction resulted in a temperature rise of about 25 °C. This was followed by the distillative removal of the ethanol formed at 80 °C at a distillation rate of 30 l/h. The target value for the resultant Ti-TPA solution was a $TiO_2$ content of 19.0% by weight. After cooling, the Ti-TPA solution was used in the TS-1 synthesis.

The pressure reactor was initially charged with: 500 kg of high-purity silicon dioxide (Evonik Industries), 382 kg of a 40% aqueous tetrapropylammonium hydroxide solution (manufacturer: Sachem), 193 kg of Ti-TPA solution, 10 kg of silicalite-1 seed crystals and 1800 kg deionized water. The mixture was stirred in the closed pressure reactor at a stirrer speed of 50 rpm at 170 °C for 3 h. The heating time to 170 °C was 180 min; after a cooling time of 150 min, the synthesis was ended. Stirring at a speed of 50 rpm was continued from start until end of the synthesis.

The silicalite-1 seed crystals were prepared by hydrothermal synthesis of 500 kg of high-purity silicon dioxide (Evonik Resource Efficiency GmbH), 400 kg of a 40% aqueous tetrapropylammonium hydroxide solution (manufacturer: Sachem) and 1800 kg of deionized water in a pressure reactor. The mixture was stirred in the closed pressure reactor at a speed of 50 rpm at 160 °C for 3 h. The heating time to 160 °C was 180 min; after a cooling time of 150 min, the synthesis was ended. Stirring at a stirrer speed of 50 rpm was continued from start until end of the synthesis.

### Example 2: Conventional workup after the hydrothermal synthesis

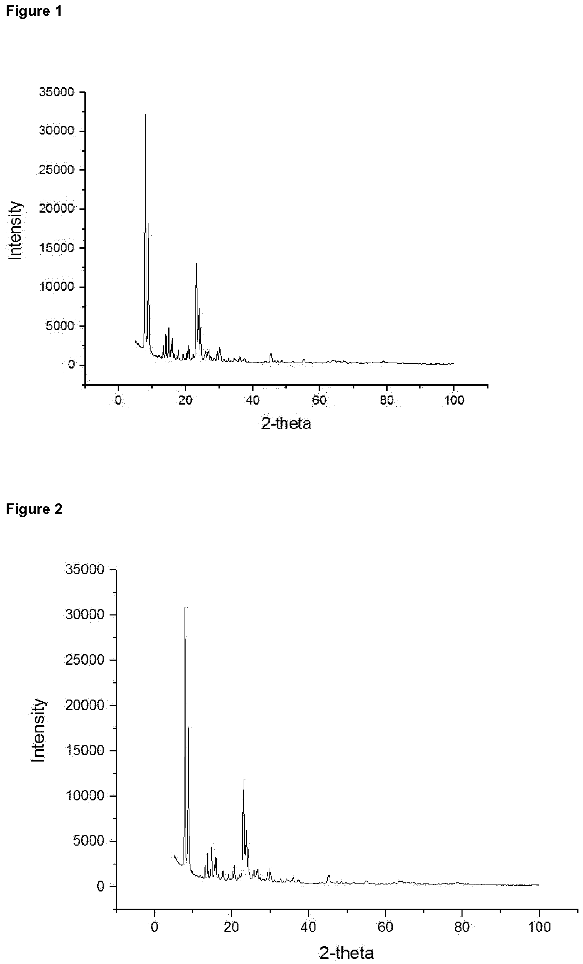

Acetic acid (60% by weight) was added to the raw suspension described in Example 1 up to pH = 7, and the precipitate formed was filtered on a filter press and washed with distilled water. The solids obtained were dried by means of spray drying with an inlet temperature of 420 °C and with an atomizer speed of 1700 min$^{-1}$ (exit temperature of 110 °C). Subsequently, the partly dried powder was calcined at a Temperature not exceeding 650 °C in a rotary tube for 2 h. The product thus obtained had a BET surface area of 470 m$^2$/g and an ignition loss (measured at 550°C) of 0.65%. XRD analysis (Figure 1) showed that the product obtained exhibits the crystal structure of TS-1 (ICDD reference code: 01-089-8099). Pore analysis with nitrogen according to BJH gave a pore volume of 0.23 ml/g.

### Example 3 (negative example): Spray calcination after hydrothermal synthesis ($T_{eff}$ = 650 °C)

The raw suspension (15 kg/h) obtained in Example 1 was sprayed in a pilot plant with 18 m$^3$/h of nitrogen for atomization through a two-phase nozzle with internal diameter 2 mm and gap 1 mm. The hydrogen/air flame was operated with 8 m$^3$/h of hydrogen and 45 m$^3$/h of primary air. The throughput of nitrogen was 18 m$^3$/h and 25 m$^3$/h of secondary air. The temperature measured 1.5 m below the ignition site was adjusted to 400 °C by slight variation of the hydrogen flow. The adiabatic combustion temperature in the reactor was about 544 °C. The average residence time of a particle in the reactor was 1.35 s. The offgases, including calcined zeolite, were guided through a cooling zone (coolant temperature: 25 °C) having a diameter of 100 mm and a length of 6 m and then collected at filter candles at max. 250 °C. By sequential cleaning of the filter candles, it was possible to collect the ready-calcined product (4.4 kg/h). The product thus obtained exhibited a loss on ignition (measured at 550 °C) of 8.6%, clearly indicating that it was unsuitable for further processing (shaping) in view of the fact that too much organic residue remained deposited on the surface of the product (loss on ignition clearly exceeded the limit value of 5%). XRD analysis (Figure 2) showed that the product exhibits the crystal structure of TS-1 (ICDD reference code: 01-089-8099).

*Simulation in detail:*

Input parameters for the gas phase:

Atomization air: 18 Nm$^3$/h
Primary air: 45 Nm$^3$/h
Secondary air: 25 Nm$^3$/h
H$_2$: 8 Nm$^3$/h
Turbulence model: Realizable k-☐ Model.
Radiation model in the gas phase: Discrete Ordinate model with
Angular discretization: Theta divisions: 4; Phi divisions 4; Theta pixels: 1; Phi pixels: 1;
Boundary condition of walls: opaque, internal emissivity: 1;
Heat transfer coefficient to environment (only for outside wall): 5 W/m$^2$/K; Environment temperature: 300 K.
Combustion model: finite-rate/eddy-dissipation

$$H_2 + 0.5O_2 \rightarrow H_2O$$

Reaction kinetics:

*Arrhenius Rate:* pre-factor = 9.87e+8, Activation energy 3.1e+7 J/kmol, rate exponents for H$_2$ and O$_2$ are 1, for H$_2$O is 0.

*Mixing Rate:* A =4, B=0.5

<u>Properties/ Property model:</u>

The Gas is treated as an ideal gas. Thermal conductivity, viscosity and heat capacity Cp of the gas mixture are calculated by using mass-weighted-mixing-law. Properties of pure components for $H_2$, $H_2O$ (v), $CO_2$, $O_2$, $N_2$ are obtained from material data base from Ansys Fluent. Mass diffusivity of each component in the gas phase is calculated using kinetic gas theory, the parameters required are all available from the Ansys Fluent data base.
Input parameters for the particle phase:

<u>Species / Properties:</u> Density of particle $\rho_p$ and Cp of particle are calculated using mixing law of all components.

Species 1: $H_2O$, initial mass fraction 60.3 % $\quad \rho = 998\frac{kg}{m^3}, \, Cp = 4182\frac{J}{kgK},$ Latent heat of water = 2263037 J/kg, Vaporization temperature $T_{vap}$ = 284K, Boiling point: $T_{bp}$ = 373 K, Saturation vapor pressure $P_{sat}(T_p)$: piecewise-linear using 32 points from T=274-647 K.
Species 2: TPAOH, initial mass fraction 9.7 %,

$$\rho = 1000\frac{kg}{m^3}, Cp = 3600\frac{J}{kgK}$$

Standard state enthalpy $H^0$= -2.12e8 J/kmol (for calculation of reaction heat $H_{reac}$)

Species 3: Silicate, initial mass fraction 30 %, $\quad \rho = 2660\frac{kg}{m^3}, \, Cp = 1052\frac{J}{kgK},$ treated as inert.

<u>Mass flow of suspension</u> $\dot{m}_p$: initial 15 kg/h

<u>Diameter (dp):</u> initial particle diameter 22 $\mu$m

<u>Group of particles:</u> 100 (mass flow of each Group $\dot{m}_{p,each\,group}$ is $\dot{m}_{p,total}$/100, no significant difference between 100 and 1000 groups, thus 100 was used.)

<u>Number of tries:</u> 10 (stochastic tracking using discrete random walk model due to turbulence effect, 10 particle tracking in each group, totally 1000 particle trajectories with mass flow $\dot{m}_{p,each\,group}$/10 were simulated).

<u>Time scale constant:</u> 0.15 (used for stochastic tracking).

<u>Reaction kinetics:</u>

TPAOH + 18.75$O_2$ → 14.5 $H_2O$ + $CO_2$ + $N_2$

Arrhenius Rate: prefactor = 0.2,

Activation energy 8e7 J/kmol

Rate exponent of $O_2$: 1.

Particle motion was calculated using Equations 1-3. Particles experience inert heating, evaporation, boiling and combustion, their temperature was calculated using Equations 4-15.

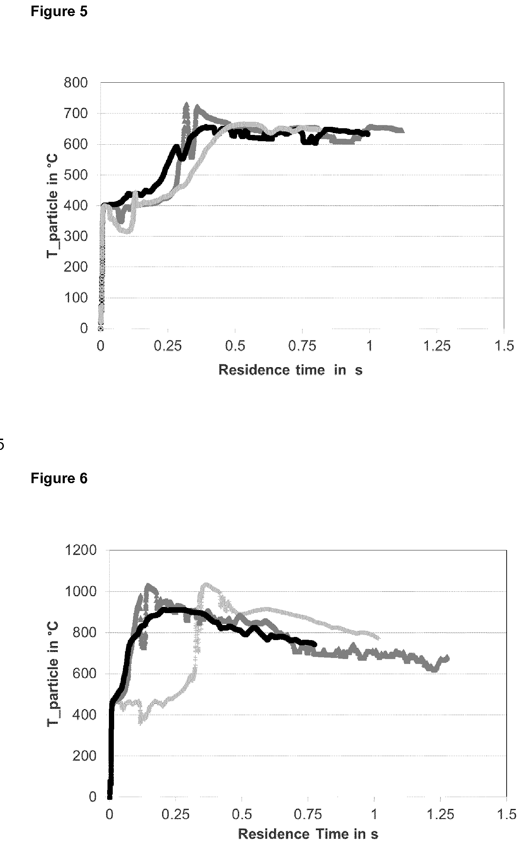

Figure 5 shows particle temperature vs. particle residence time of 3 exemplary out of 1000 (100 Groups x 10 tries in each group) calculated particle trajectories obtained for example 3.

**Example 4: Spray calcination after hydrothermal synthesis ($T_{eff}$ = 1000 °C)**

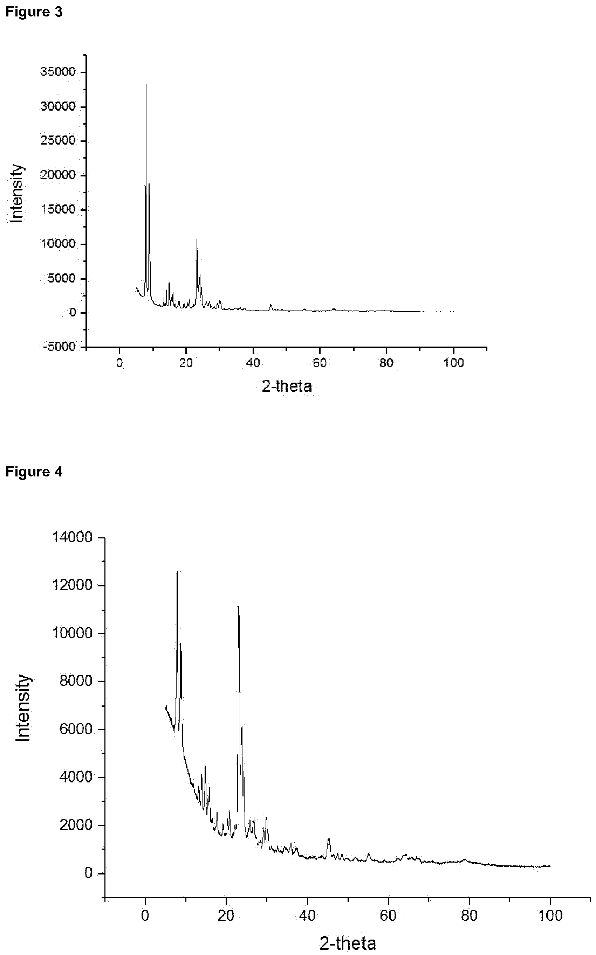

The raw suspension (25 kg/h) described in Example 1 was sprayed in a pilot plant with 18 $m^3$/h of air for atomization through a two-phase nozzle with internal diameter 2 mm and gap 1 mm. The hydrogen/air flame was operated with 8.5 $m^3$/h of hydrogen and 27 $m^3$/h of primary air. The throughput of nitrogen was 18 $m^3$/h and 25 $m^3$/h of secondary air. The temperature measured 1.5 m below the ignition site was adjusted to 700 °C by slight variation of the hydrogen flow. The adiabatic combustion temperature in the reactor was about 750 °C. The average residence time of a particle in the reactor was about 1.1 s. The offgases, including calcined zeolite, were guided through a cooling zone (coolant temperature: 25 °C) having a diameter of 100 mm and a length of 6 m and then collected at filter candles at max. 250 °C. By sequential cleaning of the filter candles, it was possible to collect the ready-calcined product (7.3 kg/h). The product thus obtained had a BET surface area of 489 $m^2$/g and a loss on ignition (measured at 550 °C) of 0.3%. XRD analysis (Figure 3) showed that the product exhibits the crystal structure of TS-1 (ICDD reference code: 01-089-8099).

Simulation of the effective particle temperature was performed analogously to example 3.

Figure 6 shows particle temperature vs. particle residence time of 3 exemplary out of 1000 (100 Groups x 10 tries in each group) calculated particle trajectories obtained for example 4.

**Example 5: (negative example): Spray calcination after hydrothermal synthesis ($T_{eff}$ = 1300 °C)**

The raw suspension (15 kg/h) described in Example 1 was sprayed in a pilot plant with 18 $m^3$/h of air for atomization through a two-phase nozzle with internal diameter 2 mm and gap 1 mm. The hydrogen/air flame was operated with 17.4 $m^3$/h of hydrogen and 40 $m^3$/h of primary air. The throughput of nitrogen was 18 $m^3$/h and 25 $m^3$/h of secondary air. The temperature measured 1.5 m below the ignition site was adjusted to 950 °C by slight variation of the hydrogen flow. The adiabatic combustion temperature in the reactor was about 980 °C. The average residence time of a particle in the reactor was about 0.9 s. The offgases, including calcined zeolite, were guided through a cooling zone (coolant temperature: 25 °C) having a diameter of 100 mm and a length of 6 m and then collected at filter candles at max. 250 °C. By sequential cleaning of the filter candles, it was possible to collect the ready-calcined product (4.4 kg/h). The product thus obtained had a BET surface area of 429 $m^2$/g and a loss on ignition (measured at 550 °C) of 0.6%. XRD analysis (Figure 4) showed some smaller signs of structural damage to the TS-1 (ICDD reference code: 01-089-8099). BET and XRD indicate that the structure is damaged with a resulting loss of surface area of about 15% (compared to example 4) and the product obtained is therefore unsuitable for further processing, i.e. shaping and use in an HPPO test reaction.

Simulation of the effective particle temperature was performed analogously to example 3.

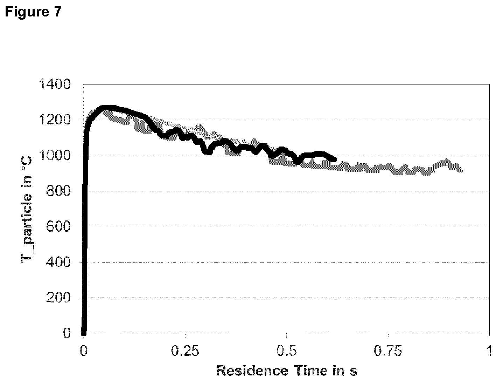

Figure 7 shows particle temperature vs. particle residence time of 3 exemplary out of 1000 (100 Groups x 10 tries in each group) calculated particle trajectories obtained for example 5.

**Example 6: Shaping of the zeolite powder from Example 2 (conventional workup)**

The powder from Example 2 (1200 g) was mixed with 75 g of methyl hydroxyethyl cellulose (Tylose MH1000), 75 g of Licowax C, 1000 g of silica sol solution (Koestrosol 0830 AS) and 350 g of deionized water in an Eirich mixer. The mass obtained was extruded with an extruder (HB-Feinmechanik LTW 63) through a perforated plate with diameter 3.2 mm. The extrudates were then dried in a drying cabinet at 80 °C for one hour and calcined in a muffle furnace at 570 °C for 12 h.

**Example 7: Shaping of the zeolite powder from Example 4 (flame spray pyrolysis workup)**

The powder from Example 4 (1200 g) was mixed with 75 g of methyl hydroxyethyl cellulose (Tylose MH1000), 75 g of Licowax C, 1000 g of silica sol solution (Koestrosol 0830 AS) and 350 g of deionized water in an Eirich mixer. The mass obtained was extruded with an extruder (HB-Feinmechanik LTW 63) through a perforated plate with diameter 3.2 mm. The extrudates were then dried in a drying cabinet at 80 °C for one hour and calcined in a muffle furnace at 570 °C for 12 h.

**Example 8: Catalytic test with the catalyst from Comparative Example 6 (conventional workup)**

Epoxidation of propene was carried out with two fixed bed reactors, each containing 9 g of catalyst from Example 6 in the form of extrudates. The reactors were arranged in series (reactor 1 → reactor 2) and were operated in up-flow mode. The first feed stream with a total flow rate of 20 g/h, consisting of methanol, hydrogen peroxide (60 wt%) and water, and a second feed stream consisting of 20 g/h of propylene were both fed to the first reactor. The reaction pressure was kept at 25 bar by means of a pressure retention valve downstream of the second reactor. The reaction mixture leaving the second fixed bed reactor was depressurized to ambient pressure. The resulting gas phase was analyzed for propylene, propylene oxide and oxygen, and the resulting liquid phase was analyzed for propylene oxide and hydrogen peroxide. The initial selectivity for propylene oxide after a reaction run time of 23 h was 91.1%. After 480 h, the selectivity for propylene oxide was 97.7%.

**Example 9: Catalytic test with the catalyst from Example 7 (flame spray pyrolysis workup)**

Epoxidation of propene was perfomed in the same way as in Example 8, but the catalyst prepared in Example 7 was used.
The initial selectivity for propylene oxide after a reaction run time of 25 h was 93.5%. After 480 h, the selectivity for propylene oxide was 98.6%.

**Table 1: Comparison of the results of catalytic test reactions**

|  | S(PO), % after 480 h | Space-time yield, kg PO/kg cat-h |
|---|---|---|
| Example 8: Conventionally prepared catalyst (Example 6) | 97.7 | 0.21 |
| Example 9: Inventive catalyst (Example 7) | 98.6 | 0.21 |

As shown by Examples 3-5 in comparison with Example 2, the process according to the invention contains much fewer process steps than the conventional process. Moreover, the process disclosed herein avoids problems of disposing wastewaters typically arising during filtration and cleaning of the product after hydrothermal synthesis. Surprisingly, the titanium silicalites obtained, after flame spray pyrolysis, have a porosity comparable to conventionally prepared titanium silicalite.
As apparent from Examples 8 and 9 (summarized in table 1), both, catalyst prepared conventionally (Example 6) as well as catalyst obtained in accordance with the present invention (Example 7), are highly active and selective in the epoxidation of propylene to propylene oxide (PO) after an operating time of 480 h. The catalyst obtained in accordance with the present invention, however, shows a selectivity for propylene oxide even higher by 0.9% than the conventional catalyst, while at the same time exhibiting comparable space-time yields. Using titanium silicalite-catalysts obtained in accordance with the invention, it is thus possible to distinctly increase the product yield of propylene oxide, based on unit time and reactor volume.

**Crystallographic data of titanium silicalite-1 (source: ICDD database)**

Reference code: 01-089-8099

Name of the compound: silicon titanium oxide

ICSD code: 88413

Reference: Lamberti, C., Bordiga, S., Zecchina, A., Carati, A., Fitch, A.N., Artioli, G., Petrini, G., Salvalaggio, M., Marra, G.L., J. Catal., 183, 222, (1999)

List of reflections:

| Number | h | k | l | d [Å] | 2θ [°] | I [%] |
|---|---|---|---|---|---|---|
| 1 | 0 | 1 | 1 | 11.17140 | 7.908 | 100.0 |
| 2 | 1 | 0 | 1 | 11.17140 | 7.908 | 100.0 |
| 3 | 2 | 0 | 0 | 10.07340 | 8.771 | 33.7 |
| 4 | 0 | 2 | 0 | 9.97825 | 8.855 | 36.2 |
| 5 | 1 | 1 | 1 | 9.74800 | 9.065 | 17.1 |
| 6 | 2 | 1 | 0 | 8.99270 | 9.828 | 1.3 |
| 7 | 2 | 0 | 1 | 8.05720 | 10.972 | 0.5 |
| 8 | 1 | 2 | 1 | 7.44190 | 11.882 | 1.1 |

(continued)

| Number | h | k | l | d [Å] | 2θ [°] | I [%] |
|---|---|---|---|---|---|---|
| 9 | 2 | 1 | 1 | 7.44190 | 11.882 | 1.1 |
| 10 | 2 | 2 | 0 | 7.08909 | 12.476 | 0.3 |
| 11 | 0 | 0 | 2 | 6.71210 | 13.180 | 4.1 |
| 12 | 1 | 0 | 2 | 6.36799 | 13.896 | 8.3 |
| 13 | 1 | 1 | 2 | 6.06662 | 14.589 | 1.0 |
| 14 | 3 | 0 | 1 | 6.00599 | 14.738 | 9.2 |
| 15 | 0 | 3 | 1 | 5.96048 | 14.851 | 6.0 |
| 16 | 1 | 3 | 1 | 5.71559 | 15.491 | 5.5 |
| 17 | 0 | 2 | 2 | 5.58570 | 15.853 | 5.7 |
| 18 | 2 | 0 | 2 | 5.58570 | 15.853 | 5.7 |
| 19 | 2 | 1 | 2 | 5.36799 | 16.501 | 1.9 |
| 20 | 1 | 2 | 2 | 5.36799 | 16.501 | 1.9 |
| 21 | 2 | 3 | 1 | 5.14575 | 17.219 | 0.8 |
| 22 | 3 | 2 | 1 | 5.14575 | 17.219 | 0.8 |
| 23 | 4 | 0 | 0 | 5.03670 | 17.594 | 2.4 |
| 24 | 0 | 4 | 0 | 4.98912 | 17.764 | 3.4 |
| 25 | 4 | 1 | 0 | 4.88356 | 18.151 | 0.4 |
| 26 | 2 | 2 | 2 | 4.88356 | 18.151 | 0.4 |
| 27 | 4 | 0 | 1 | 4.71570 | 18.803 | 0.1 |
| 28 | 3 | 1 | 2 | 4.61852 | 19.202 | 2.4 |
| 29 | 1 | 4 | 1 | 4.55547 | 19.470 | 0.3 |
| 30 | 4 | 2 | 0 | 4.49635 | 19.729 | 0.2 |
| 31 | 2 | 4 | 0 | 4.45787 | 19.901 | 0.5 |
| 32 | 3 | 3 | 1 | 4.45787 | 19.901 | 0.5 |
| 33 | 0 | 1 | 3 | 4.36632 | 20.322 | 3.0 |
| 34 | 1 | 0 | 3 | 4.36632 | 20.322 | 3.0 |
| 35 | 4 | 2 | 1 | 4.26355 | 20.818 | 5.0 |
| 36 | 1 | 1 | 3 | 4.26355 | 20.818 | 5.0 |
| 37 | 2 | 0 | 3 | 4.08941 | 21.715 | 1.1 |
| 38 | 4 | 3 | 0 | 4.01553 | 22.119 | 1.9 |
| 39 | 2 | 1 | 3 | 4.01553 | 22.119 | 1.9 |
| 40 | 4 | 1 | 2 | 3.94894 | 22.497 | 0.3 |
| 41 | 4 | 3 | 1 | 3.85926 | 23.027 | 30.6 |
| 42 | 5 | 0 | 1 | 3.85926 | 23.027 | 30.6 |
| 43 | 3 | 4 | 1 | 3.82578 | 23.231 | 23.6 |
| 44 | 0 | 5 | 1 | 3.82578 | 23.231 | 23.6 |
| 45 | 1 | 5 | 1 | 3.75861 | 23.652 | 10.4 |
| 46 | 3 | 0 | 3 | 3.72380 | 23.877 | 15.6 |

(continued)

| Number | h | k | l | d [Å] | 2θ [°] | I [%] |
|---|---|---|---|---|---|---|
| 47 | 0 | 3 | 3 | 3.72380 | 23.877 | 15.6 |
| 48 | 3 | 1 | 3 | 3.65139 | 24.357 | 12.3 |
| 49 | 1 | 3 | 3 | 3.65139 | 24.357 | 12.3 |
| 50 | 5 | 2 | 1 | 3.59942 | 24.714 | 1.2 |
| 51 | 4 | 4 | 0 | 3.54454 | 25.103 | 0.1 |
| 52 | 3 | 2 | 3 | 3.48877 | 25.511 | 1.8 |
| 53 | 2 | 3 | 3 | 3.48877 | 25.511 | 1.8 |
| 54 | 4 | 3 | 2 | 3.44594 | 25.834 | 4.1 |
| 55 | 3 | 4 | 2 | 3.44594 | 25.834 | 4.1 |
| 56 | 5 | 1 | 2 | 3.40404 | 26.157 | 1.0 |
| 57 | 1 | 5 | 2 | 3.38191 | 26.332 | 0.8 |
| 58 | 0 | 0 | 4 | 3.35780 | 26.524 | 2.2 |
| 59 | 6 | 0 | 0 | 3.35780 | 26.524 | 2.2 |
| 60 | 5 | 3 | 1 | 3.34523 | 26.626 | 1.1 |
| 61 | 4 | 0 | 3 | 3.34523 | 26.626 | 1.1 |
| 62 | 0 | 6 | 0 | 3.32608 | 26.782 | 2.1 |
| 63 | 3 | 5 | 1 | 3.32608 | 26.782 | 2.1 |
| 64 | 6 | 1 | 0 | 3.31043 | 26.911 | 3.6 |
| 65 | 1 | 0 | 4 | 3.31043 | 26.911 | 3.6 |
| 66 | 5 | 2 | 2 | 3.26581 | 27.286 | 0.6 |
| 67 | 1 | 1 | 4 | 3.26581 | 27.286 | 0.6 |
| 68 | 6 | 0 | 1 | 3.25744 | 27.357 | 0.7 |
| 69 | 3 | 3 | 3 | 3.24744 | 27.443 | 1.2 |
| 70 | 2 | 5 | 2 | 3.24744 | 27.443 | 1.2 |
| 71 | 6 | 1 | 1 | 3.21490 | 27.726 | 0.1 |
| 72 | 2 | 0 | 4 | 3.18399 | 28.001 | 0.7 |
| 73 | 6 | 2 | 0 | 3.18399 | 28.001 | 0.7 |
| 74 | 4 | 2 | 3 | 3.17173 | 28.111 | 0.4 |
| 75 | 1 | 2 | 4 | 3.14203 | 28.383 | 1.2 |

**Claims**

1. Process for preparing a pulverulent, porous crystalline metal silicate, comprising the following steps:

   (a) hydrothermal synthesis employing an aqueous mixture comprising

   (A) a silicon source,
   (B) a metal source, and
   (C) an auxiliary component,
   yielding an aqueous suspension of reaction product 1, comprising a raw porous crystalline metal silicate; and

(b) flame spray pyrolysis of reaction product 1, wherein the aqueous suspension obtained in step (a) is sprayed into a flame generated by combustion of a fuel in the presence of oxygen to form a pulverulent, porous crystalline metal silicate;

wherein the aqueous suspension comprising reaction product 1 obtained in step (a) exhibits a solids content of $\leq$ 70% by weight; and

wherein the effective peak temperature, $T_{eff}$, experienced by at least 90% by weight of the porous crystalline metal silicate during flame pyrolysis, is in the range $T_{min} < T_{eff} < T_{max}$, and

wherein $T_{min}$ is 750 °C, and

wherein $T_{max}$ is 1250 °C.

2. Process according to claim 1, wherein component (A) is selected from the group consisting of pyrogenic silicon dioxide, precipitated silicon dioxide, silicon dioxide produced by a sol-gel process and mixtures thereof.

3. Process according to any one of claims 1 to 2, wherein in step (a), component (A) and component (B) are merged into a single component and this component is selected from the group consisting of amorphous mixed metal-silicon oxide, amorphous silicon dioxide doped with metal oxide, amorphous silicon dioxide impregnated with metal, metal silicate, metal-doped tetraalkyl orthosilicate and mixtures thereof.

4. Process according to any one of claims 1 to 3, wherein the metal source (B) is a source of titanium (Ti).

5. Process according to any one of claims 1 to 4, wherein the auxiliary component (C) is selected from the group consisting of organic bases, quaternary ammonium hydroxides and mixtures thereof.

6. Process according to claim 1, wherein

component (A) is selected from the group consisting of pyrogenic silicon dioxide, precipitated silicon dioxide, silicon dioxide produced by a sol-gel process and mixtures thereof, and wherein

the metal source (B) is a source of titanium (Ti), and wherein

auxiliary component (C) is selected from the group consisting of organic bases, quaternary ammonium hydroxides and mixtures thereof, and wherein

the porous crystalline metal silicate has a zeolite structure of MFI or MEL type, and wherein the fuel used for flame spray pyrolysis is hydrogen.

7. Process according to claim 1, wherein

component (A) and component (B) are merged into a single component and this component is selected from the group consisting of amorphous mixed metal-silicon oxide, amorphous silicon dioxide doped with metal oxide, amorphous silicon dioxide impregnated with metal, metal silicate, metal-doped tetraalkyl orthosilicate and mixtures thereof, and wherein

the metal source (B) is a source of titanium (Ti), and wherein

auxiliary component (C) is selected from the group consisting of organic bases, quaternary ammonium hydroxides and mixtures thereof, and wherein

the porous crystalline metal silicate has a zeolite structure of MFI or MEL type, and wherein the fuel used for flame spray pyrolysis is hydrogen.

8. Process according to any one of claims 1 to 7, wherein the auxiliary component is tetrapropylammonium hydroxide.

9. Process according to any one of claims 1 to 8, wherein $T_{min}$ is 800 °C, and wherein $T_{max}$ is 1200 °C.

10. Process according to any one of claims 1 to 8, wherein Tmin is 850 °C, and wherein Tmax is 1100 °C.

11. Process according to any one of claims 1 to 10, wherein the aqueous mixture in step (a) additionally comprises suitable seed crystals.

12. Process according to any one of claims 1 to 5 and 8 to 11, wherein the porous crystalline metal silicate has a zeolite structure of MFI or MEL type.

13. Process according to any one of claims 1 to 5 and 8 to 12, wherein the fuel used for flame spray pyrolysis is hydrogen.

14. Process according to any one of claims 1 to 13, wherein the porous crystalline metal silicate obtained thereby exhibits a loss on ignition according to DIN 18128:2002-12 of less than 5% by weight.

15. Process according to any one of claims 1 to 14, wherein step (b) is followed by a shaping step (c) comprising the following substeps:

   (1) adding water for obtaining an aqueous suspension of the pulverulent, porous crystalline metal silicate,
   (2) mixing the suspension obtained in substep (1) with granulating aids,
   (3) compacting, granulating, spray-drying, spray granulating and/or extruding the product obtained in substep (2) for obtaining a porous crystalline metal silicate in the form of microgranules, spheres, tablets, solid cylinders, hollow cylinders or honeycombs.

**Figure 1**

**Figure 2**

**Figure 3**

**Figure 4**

**Figure 5**

**Figure 6**

**Figure 7**

Europäisches
Patentamt

European
Patent Office

Office européen
des brevets

# EUROPEAN SEARCH REPORT

Application Number

EP 18 19 6479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/253547 A1 (CORRE THIBAUT [FR] ET AL) 7 September 2017 (2017-09-07) * paragraph [0101] - paragraph [0120]; claims 20-28 * ----- | 1-15 | INV. C01B37/00 C01B39/02 |
| A | US 6 106 803 A (HASENZAHL STEFFEN [DE] ET AL) 22 August 2000 (2000-08-22) * column 2, line 12 - column 3, line 9; claims 10-16; examples 1, 3, 7 * ----- | 1-15 | |
| A | US 2014/301942 A1 (GUO HONGCHEN [CN] ET AL) 9 October 2014 (2014-10-09) * paragraph [0024] - paragraph [0025]; claims 1-5; example 1 * ----- | 1-15 | |
| A | US 5 919 430 A (HASENZAHL STEFFEN [DE] ET AL) 6 July 1999 (1999-07-06) * claims 1-20; examples 1, 3, 4 * ----- | 1-15 | |

TECHNICAL FIELDS
SEARCHED (IPC)

C01B

The present search report has been drawn up for all claims

| Place of search | Date of completion of the search | Examiner |
|---|---|---|
| The Hague | 8 February 2019 | Sevillano Rodriguez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 6479

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2019

| Patent document cited in search report | | Publication date | Patent family member(s) | | Publication date |
|---|---|---|---|---|---|
| US 2017253547 | A1 | 07-09-2017 | CN | 104302395 A | 21-01-2015 |
| | | | CN | 108435247 A | 24-08-2018 |
| | | | EP | 2814606 A1 | 24-12-2014 |
| | | | FR | 2987046 A1 | 23-08-2013 |
| | | | JP | 2015511945 A | 23-04-2015 |
| | | | JP | 2019001711 A | 10-01-2019 |
| | | | US | 2015299076 A1 | 22-10-2015 |
| | | | US | 2017253547 A1 | 07-09-2017 |
| | | | WO | 2013120986 A1 | 22-08-2013 |
| US 6106803 | A | 22-08-2000 | BR | 9802594 A | 12-12-2000 |
| | | | DE | 19731627 A1 | 28-01-1999 |
| | | | EP | 0893158 A1 | 27-01-1999 |
| | | | EP | 1382391 A1 | 21-01-2004 |
| | | | ES | 2218730 T3 | 16-11-2004 |
| | | | ES | 2285014 T3 | 16-11-2007 |
| | | | TW | 513384 B | 11-12-2002 |
| | | | US | 6106803 A | 22-08-2000 |
| | | | ZA | 9806547 B | 03-02-1999 |
| US 2014301942 | A1 | 09-10-2014 | CN | 102502690 A | 20-06-2012 |
| | | | US | 2014301942 A1 | 09-10-2014 |
| | | | WO | 2013063893 A1 | 10-05-2013 |
| US 5919430 | A | 06-07-1999 | US | 5919430 A | 06-07-1999 |
| | | | US | 2001001656 A1 | 24-05-2001 |
| | | | US | 2001055562 A1 | 27-12-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101348263 A
- US 4410501 A
- EP 814058 A1
- CN 1482062
- WO 2010037702 A
- EP 0814058 A
- DE 102007049742
- WO 2017001366 A1
- US 20020041963 A1
- EP 0814058 B1

**Non-patent literature cited in the description**

- Zeolites. Ullmann's Encyclopedia of Industrial Chemistry. 15 April 2012
- *Advanced Materials Research,* 2011, vol. 287-290, 317-321
- **BARRETT ; JOYNER ; HALENDA.** *Journal of the American Chemical Society,* 1951, vol. 73, 373-380
- Ullmann's Enzyklopädie der Technischen Chemie [Ullmann's Encyclopedia of Industrial Chemistry. 1972, vol. 2, 295 ff
- **LAMBERTI, C. ; BORDIGA, S. ; ZECCHINA, A. ; CARATI, A. ; FITCH, A.N. ; ARTIOLI, G. ; PETRINI, G. ; SALVALAGGIO, M. ; MARRA, G.L.** *J. Catal.,* 1999, vol. 183, 222